# EUROPÄISCHE PATENTSCHRIFT

(11) **EP 3 265 350 B1**
(45) Veröffentlichungstag und Bekanntmachung des Hinweises auf die Patenterteilung: **20.01.2021**
(21) Anmeldenummer: 16707417.8
(22) Anmeldetag: 29.02.2016
(51) Int. Cl.: B60T 13/66, B60T 17/22

(54) **STEUERGERÄT UND VERFAHREN FÜR EIN KRAFTFAHRZEUGBREMSSYSTEM**
CONTROL UNIT AND METHOD FOR A VEHICLE BRAKE SYSTEM
UNITÉ DE CONTRÔLE ET PROCÉDÉ POUR UN SYSTÈME DE FREINS DE VÉHICULE

(30) Priorität: 02.03.2015 DE 102015203700; 09.12.2015 DE 102015224708
(43) Veröffentlichungstag der Anmeldung: 10.01.2018
(73) Patentinhaber: Continental Teves AG & Co. OHG, 60488 Frankfurt am Main (DE)
(72) Erfinder: HEISE, Andreas, 64390 Erzhausen (DE)
(86) Internationale Anmeldenummer: PCT/EP2016/054209
(87) Internationale Veröffentlichungsnummer: WO 2016/139173

(56) Entgegenhaltungen:
- DE-A1-102012 202 175
- US-A1- 2011 316 329

## Beschreibung

Die Erfindung betrifft ein Steuergerät für ein Kraftfahrzeugbremssystem gemäß Oberbegriff von Anspruch 1 sowie ein korrespondierendes Verfahren gemäß Oberbegriff von Anspruch 5 und ein Bremssystem.

Fahrerassistenzsysteme werden in den letzten Jahren immer komplexer. Neben den Systemen die dem Fahrer das Fahren erleichtern, werden Systeme die das Fahrzeug bewegen können, ohne dass der Fahrer sich im Fahrzeug aufhält, zunehmend Anwendung finden. Derartige Funktionen sind z.B. das hochautomatisierte Parken. Hier gibt es verschiedene Ausprägungen. Das Fahrzeug bewegt sich z.B. in eine Parklücke hinein oder aus einer Parklücke heraus, wobei der Fahrer außerhalb des Fahrzeuges mittels Fernbedienung, z.B. eines Mobiltelefons oder dem Fahrzeugschlüssel, den Ein- bzw. Ausparkvorgang initiieren, unterbrechen sowie beenden kann. Derartige Funktionalitäten lassen sich auch auf Parkhäuser skalieren, in denen sich die Fahrzeuge ganz oder teilweise fahrerlos bewegen können, wobei Ebenen aber auch Steigungen oder Gefällstrecken auftreten.

Fahrzeuge, die derartige Funktionalitäten aufweisen, müssen in der Lage sein, bei einer auftretenden Störung eines mitwirkenden Systems, z.B. des Systems zum Fernbedienen des Fahrzeugs, sicher in den Stillstand zu gelangen. Im Besonderen bei Ausfall des Bremssystems, muss das Fahrzeug dennoch zuverlässig in den Stillstand gebracht und dort gehalten werden können. Die Anforderungen an Systeme des hochautomatisierten Fahrens sind also höher als für gegenwärtige.

Im Falle eines zentralen Bremsensteuergeräts wird üblicherweise eine mikroprozessorgesteuerte Sicherheitsarchitektur vorgesehen, welche durch redundantes Rechnen und oft auch redundante Abschaltpfade, bei Auftreten eines Fehlerfalls abschaltet, um in einen sicheren Zustand zu gelangen. Fehler können sich hier beispielsweise in der Spannungsversorgung in Mikroprozessorschaltkreisen oder z.B. durch einen Brand auf einer Leiterplatte des Bremsensteuergeräts darstellen.

Die aus Sicherheitsgründen gewählte ausfallsichere Architektur für Fehlanregelungen durch das Bremssystem führt zu einem gänzlichen oder teilweisen Abschalten des Bremsensteuergerätes, wodurch ein zuverlässiges und selbständiges Anhalten ohne Fahrereingriff nicht mehr möglich ist. Auch ein Ausfallen der Spannungsversorgung (Bordnetz) lässt ein automatisiertes Betätigen der Betriebsbremse nicht mehr zu. An einem Hang würde das Fahrzeug beispielsweise unkontrolliert weiterrollen oder sogar beschleunigen können.

Aufgabe der vorliegenden Erfindung ist es daher, ein Steuergerät für ein Kraftfahrzeugsystem bereitzustellten, mittels welchem die Anforderungen des hochautomatisierten Parken erfüllt werden können. Insbesondere soll bei Auftreten eines internen Fehlers bzw. einer Störung während eines hochautomatisierten Parkvorgangs ein Abbremsen des Fahrzeugs in den Stillstand sichergestellt werden.

Diese Aufgabe wird durch das erfindungsgemäße Steuergerät gemäß Anspruch 1 sowie das Verfahren gemäß Anspruch 5 gelöst.

Die Erfindung betrifft eine Steuergerät für ein Kraftfahrzeugbremssystem, umfassend eine erste funktionelle Baugruppe zur Ansteuerung einer Betriebsbremse und eine zweite funktionelle Baugruppe zur Ansteuerung einer Feststellbremse, wobei die erste und die zweite funktionelle Baugruppe von separaten Spannungsversorgungen versorgbar sind, und das Steuergerät derart ausgestaltet ist, dass bei einem Fehler in oder mit Auswirkung für die erste oder die zweite funktionelle Baugruppe die jeweils andere funktionelle Baugruppe zumindest eine definierte Zeitspanne einsatzbereit verbleibt und zum Einrasten einer Getriebesperre des Fahrzeugs und/oder zum Halten des Fahrzeugs mittels der Feststellbremse im Stillstand eine Abbremsung des Kraftfahrzeugs mittels der einsatzbereiten funktionellen Baugruppe innerhalb der definierten Zeitspanne ausführbar ist.

Mit anderen Worten ist das Steuergerät zweckmäßigerweise derart ausgelegt, dass Auswirkungen auf die jeweils weitere Bremsfunktion - Betriebsbremse oder elektrische Feststellbremse (nachfolgend nur noch Feststellbremse genannt) - in Folge beispielsweise eines Schadens, Kurzschlusses, Wassereinbruchs, etc. zumindest für die definierte Zeitspanne vermieden werden können und diese erst nach dieser Zeitspanne voraussichtlich ausfällt. Durch eine Sicherstellung der Funktionalität von zumindest einer der Bremsfunktionen (Betriebs- oder Feststellbremse) für beispielsweise mindestens ca. 1 Sekunde nach Auftreten einer Störung bzw. mit Folge für wenigstens eine der Bremsfunktionen/funktionellen Baugruppen kann das Fahrzeug bzw. dessen Räder innerhalb dieser Zeitspanne vorteilhafterweise derart abgebremst werden, das es entweder dauerhaft nicht weiter rollen kann (Feststellbremse) oder, insbesondere bei einem Ausfall der Betriebsbremse, die Sperrklinke eines Automatikgetriebes (Getriebesperre) bei geringer Geschwindigkeit automatisch ausgelöst wird und dann das Ausfallen des Betriebsbremssystems, welches üblicherweise nicht dauerhaft verriegeln kann, tolerierbar ist, da ebenfalls ein weiterrollen des Fahrzeugs verhindert wird. Das Fahrzeug wird zweckmäßigerweise auf eine Geschwindigkeit (z.B. <2km/h) oder in den Stand abgebremst, sodass die Sperrklinke im Automatikgetriebe sicher eingelegt werden kann oder beim Unterschreiten einer Minimalgeschwindigkeit selbsttätig stromlos in die Verriegelung fällt und/oder das Fahrzeug wird mittels der Feststellbremse in den Stillstand gebremst und kann im Stillstand weiterhin mit dieser im Stillstand gehalten werden, wobei zusätzlich die Getriebesperre das Fahrzeug im Stillstand halten kann. Beispielsweise erfolgt ein Volllaufen des Gehäuses des Steuergerätes bei einem Wassereinbruch im Falle eines beschädigten Gehäuses im automatisierten Parkbetrieb unter normalen Bedingungen nicht schneller als eine Sekunde, sodass eine Abbremsung in den Stillstand durchführbar ist. Weiterhin ergeben sich durch die Kombination der Feststellbremse mit der Betriebsbremse in einem Steuergerät Vorteile hinsichtlich zusätzlicher Rückfallebenen (zusätzliche Sicherheit) und komfortorientierten Verhaltens für die Fahrzeuginsassen. Eine funktionelle Baugruppe im Sinne der Erfindung ist beispielsweise ein Mikroprozessor, ein Mikrocontroller oder ein Steuerwerk. Unter einem automatisierten Parkvorgang wird vorzugsweise das rechnergestützte automatisierte Bewegen eines Fahrzeugs in eine - insbesondere gewünschte - Stillstandsposition oder aus einer solchen heraus verstanden. Zusätzlich können ein Gehäuse und/oder weitere Komponenten des Steuergeräts in der Weise ausgestaltet sein, dass die Separierung zur Sicherstellung der definierten Zeit der Aufrechterhaltung der Funktionsfähigkeit wenigstens einer der Bremsfunktionalitäten verbessert wird.

In vorteilhafter Weise wird mit der erfindungsgemäßen Lösung ein Steuergerät bereitgestellt, welches im Vergleich zum Stand der Technik lediglich eines geringfügigen Mehraufwands bedarf, jedoch für Fahrzeuge, welche HAP (hochautomatisiertes Parken) unterstützen, sowie in Fahrzeugen ohne HAP verwendet werden kann. Damit können die Ansteuerung der Feststellbremse und das hochautomatisierte Parken mittels eines zentralen Steuergeräts erfolgen.

Entsprechend einer bevorzugten Weiterbildung der Erfindung sind die erste funktionelle Baugruppe und die zweite funktionelle Baugruppe voneinander separiert. Diese Separierung ist vorzugsweise in der Weise ausgestaltet, dass bei einem Fehler mit Auswirkung auf zumindest eine der funktionellen Baugruppen die jeweils andere funktionelle Baugruppe noch eine definierte Zeitspanne, z.B. etwa eine Sekunde, betriebsbereit bleibt. Dies kann insbesondere mittels konstruktiver Maßnahmen, wie zum Beispiel einer entsprechenden Ausgestaltung eines Gehäuses eines zugrundeliegenden Steuergeräts und/oder einer funktionalen und ggf. elektrischen Trennung betreffender funktioneller Baugruppen, realisiert werden. Diese Separierung kann zweckmäßigerweise auch auf einer die funktionellen Baugruppen umfassenden Leiterplatte realisiert sein. Vorzugsweise ist das Steuergerät in der Weise ausgestaltet, dass die erste funktionelle Baugruppe und die zweite funktionelle Baugruppe zur gemeinsamen Kommunikation ausgestaltet sind, beispielsweise um eine einseitige oder gegenseitige Überprüfung der Versorgung und/oder Funktionalität zu ermöglichen.

Bevorzugt ist zumindest eine Erkennungsschaltung zur Erkennung einer Unterbrechung eines Versorgungspotentials und/oder eines Bezugspotentials wenigstens einer der Spannungsversorgungen vorgesehen. Zweckmäßigerweise handelt es sich um voneinander im wesentliche unabhängige Spannungsversorgungen und/oder Spannungsquellen. Bei Ausfall einer der Spannungsversorgungen kann dies vorteilhafterweise erkannt und entsprechende Maßnahmen, wie beispielsweise Abbremsen des Fahrzeugs in den Stillstand, ergriffen werden. Zumindest eine der separaten Spannungsversorgungen ist entsprechend einer bevorzugten Ausführungsform gepuffert.

Das Steuergerät kann zweckmäßigerweise mit einem gemeinsamen Stecker zur Versorgung der Betriebsbremse sowie der Feststellbremse, welcher eine geeignete Anordnung der Steckerpins aufweist, ausgelegt sein.

Weiterhin beschreibt die Erfindung ein Verfahren zur Ausführung in einem Steuergerät eines Kraftfahrzeugs, welches eine erste funktionelle Baugruppe zur Ansteuerung einer Betriebsbremse und eine zweite funktionelle Baugruppe zur Ansteuerung einer Feststellbremse aufweist, wobei die erste und die zweite funktionelle Baugruppe von separaten Spannungsversorgungen versorgbar sind und bei einem Fehler in oder mit Auswirkung für die erste oder die zweite funktionelle Baugruppe die jeweils andere funktionelle Baugruppe zumindest eine definierte Zeitspanne einsatzbereit verbleibt und mittels der einsatzbereiten funktionellen Baugruppe und innerhalb der definierten Zeitspanne eine Abbremsung des Kraftfahrzeugs bis zu einem Einrasten einer Getriebesperre des Fahrzeugs bewirkt wird und/oder das Fahrzeug mittels der Feststellbremse im Stillstand gehalten werden kann.
Entsprechend einer vorteilhaften Weiterbildung des Verfahrens wird die zweite funktionelle Baugruppe von der ersten funktionellen Baugruppe überwacht, wenn beide Baugruppen im laufenden Betrieb sind.

Eine Ansteuerung einer durch die zweite funktionelle Baugruppe betriebenen Feststellbremse erfolgt vorzugsweise auf Anforderung oder bei Zulassung durch die erste funktionelle Baugruppe. Entsprechend einer Ausführungsform erfolgt eine Ansteuerung einer durch die zweite funktionelle Baugruppe betriebenen Feststellbremse, wenn die erste funktionelle Baugruppe eine selbstständige Ansteuerung durch die zweite funktionelle Baugruppe zulässt oder als Folge eines Fehlers in oder mit Auswirkung für die erste funktionelle Baugruppe

Das erfindungsgemäße Verfahren wird vorzugsweise während eines automatisierten Parkvorgangs durchgeführt. Gemäß einer zweckmäßigen Ausgestaltung des erfindungsgemäßen Verfahrens liegt während eines Betriebes zum automatisierten Parken ein von der ersten elektronischen Baugruppe unabhängiger Betrieb der Feststellbremse durch die zweite elektronische Baugruppe vor. Der Betrieb zum automatisierten Parken umfasst dabei insbesondere automatisierte Ein- und Ausparkvorgänge. Insbesondere bei Auftreten einer Störung oder eines Fehlers mit Wirkung für die erste funktionelle Baugruppe während des HAP-Betriebes kann die Feststellbremse in vorteilhafter Weise eigenständig durch die zweite funktionelle Baugruppe aktiviert und das Fahrzeug in den Stillstand gebracht werden.

Die Erfindung betrifft zudem ein Bremssystem, welches ein erfindungsgemäßes Steuergerät umfasst.

Weitere bevorzugte Ausführungsformen ergeben sich aus den Unteransprüchen und der nachfolgenden Beschreibung von Ausführungsbeispielen an Hand von Figuren.

In schematischer Darstellung zeigen:
- Fig. 1: ein Ausführungsbeispiel des Bremssystems 1 umfassend eine funktionelle Baugruppe G1 zum Betrieb der Betriebsbremse und der Feststellbremse mit einer Spannungsversorgung U1,
- Fig. 2: das Bremssystem 1 umfassend eine funktionelle Baugruppe G1 zum Betrieb der Betriebsbremse und der Feststellbremse mit zwei separaten Spannungsversorgungen U1, GND 1 und U2, GND 2,
- Fig. 3: das Bremssystem 1 umfassend eine funktionelle Baugruppe G2 zum Betrieb der Betriebsbremse und eine funktionelle Baugruppe G3 zum Betrieb der Feststellbremse, welche voneinander separiert sind und jeweils eine eigenständige Spannungsversorgung U1, GND 1 bzw. U2, GND2 aufweisen und die mittels Kommunikationsschnittstelle L1 kommunizieren können,
- Fig. 4: das Bremssystem 1 umfassend eine funktionelle Baugruppe G2 zum Betrieb der Betriebsbremse und eine funktionelle Baugruppe G3 zum Betrieb der Feststellbremse, welche voneinander separiert sind und jeweils eine eigenständige Spannungsversorgung U1, GND 1 bzw. U2, GND2 aufweisen und die mittels Kommunikationsschnittstelle L1 kommunizieren können und eine Erkennungsschaltungen GLD für die Erkennung einer Unterbrechung des/der GND Potentiale aufweisen und
- Fig. 5: die funktionelle Baugruppe G3 zum Betrieb der Feststellbremse mit einer zugeordneten Versorgungspannung U2, GND2 und einem umfassten Schaltungsteil UC zum autarken Betrieb der Feststellbremsen EPB-L, EPB-R.

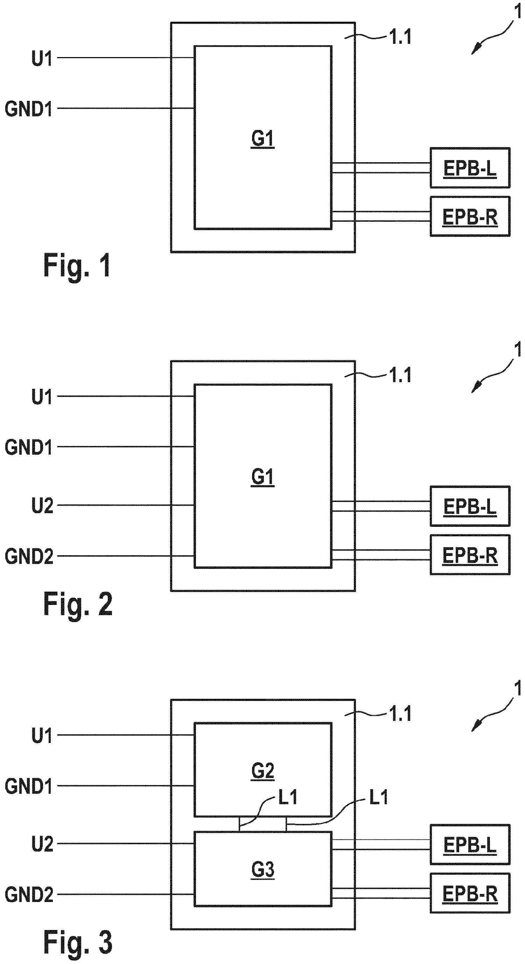

Um eine kurze und einfache Beschreibung der Ausführungsbeispiele zu ermöglichen, werden gleiche Elemente mit den gleichen Bezugszeichen versehen. Die Figuren 1 und 2 gehören nicht zum Umfang der Erfindung, da sie jeweils nur eine Baugruppe zeigen.

Die Fig. 1 zeigt ein Bremssystem 1 umfassend Steuergerät 1.1, welches eine funktionelle Baugruppe G1 zur Ansteuerung von Betriebsbremsaktuatoren (nicht dargestellt) sowie von zwei Feststellbremsaktuatoren bzw. Parkbremsaktuatoren EPB-L und EPB-R aufweist, und das von einer Spannungsversorgung U1, GND1 versorgt wird. Die Betriebsbremsaktuatoren sind in den Figuren 1 bis 5 nicht dargestellt, in der konkreten Realisierung jedoch vorgesehen.

Gemäß Fig. 2 wird eine weitere, möglichst unabhängige Spannungsversorgung U2, GND2 im Fahrzeug integriert, welche in Ergänzung zu Spannungsversorgung U1, GND1 ebenfalls zur Versorgung von Steuergerät 1.1 und der funktionellen Baugruppe G1 vorgesehen ist. Zumindest eine der Spannungsversorgungen kann auch gepuffert realisiert sein, sodass nach Wegfall dieser Spannungsversorgung über eine begrenzte Zeit ein Weiterbetrieb der Betriebsbremse und/oder der Feststellbremse mittels funktioneller Baugruppe G1, z.B. ein Mikroprozessor oder Steuerwerk, möglich ist. Die Spannungsversorgung U2, GND2 sowie ggf. weitere elektrische Anschlüsse können über einen zusätzlichen elektrischen Steckverbinder oder durch entsprechende Auslegung über einen gemeinsamen Stecker mit der ersten Spannungsversorgung U1, GND1 übertragen werden. Das Bezugspotential kann über zwei Leitungen GND1, GND2 oder über eine gemeinsame Leitung bereitgestellt werden, wenn ein Weiterbetrieb wenigstens einer der Bremsfunktionalitäten von Bremssystem 1 bei Unterbrechung dieser gemeinsamen Leitung sichergestellt werden kann. Bevorzugt ist eine Erkennung eines Ausfalls der oder einer der Bezugspotentialanbindungen GND1, GND2 und/oder der Versorgungspotentiale U1, U2 vorgesehen.

Entsprechend des erfindungsgemäßen Bremssystems 1 nach Fig. 3 ist die funktionelle Baugruppe G3 zur Ansteuerung der Parkbremsaktuatoren EPB-L, EPB-R von der funktionellen Baugruppe G2 zur Ansteuerung der Betriebsbremsaktuatoren derart getrennt ausgeführt, dass eine verbesserte Verfügbarkeit realisierbar ist. Die separierten Baugruppen werden jeweils durch eine eigenständige Spannungsversorgungen U1, GND1 bzw. U2, GND2 versorgt, wobei Realisierungen - z.B. gemeinsamer Stecker - wie sie bereits für das Ausführungsbeispiel nach Fig. 2 beschrieben wurden, vorgesehen werden können. Diese Separierung ist vorzugsweise in der Weise ausgestaltet, dass bei einem Fehler mit Auswirkung auf zumindest eine der funktionellen Baugruppen G2, G3 die jeweils andere funktionelle Baugruppe (mit eigener Spannungsversorgung) noch eine definierte Zeitspanne, z.B. etwa eine Sekunde, betriebsbereit bleibt, wobei auch eine Realisierung auf einer gemeinsamen Leiterplatte vorgesehen sein kann. In dieser Zeitspanne ist das Fahrzeug sicher abbremsbar, sodass die Feststellbremse (Parkbremse) oder die Getriebesperre das Fahrzeug sichern kann. Die separierten funktionellen Baugruppen brauchen dabei nicht notwendigerweise eine Einordnung in eine gleiche Sicherheitsanforderungsstufe (z.B. ASIL) aufzuweisen. Beispielsweise könnte eine Auslegung der funktionellen Baugruppe zur Ansteuerung der Feststellbremse - insbesondere auch im HAP-Betriebsmodus - für eine Einstufung in eine ebenso hohe Stufe, wie die des Hauptprozessors bzw. der funktionellen Baugruppe zur Ansteuerung der Betriebsbremse, verzichtet werden.

Zur Kommunikation der funktionellen Baugruppen G2 und G3 ist Schnittstelle L1 vorgesehen. Die funktionelle Baugruppe G3 zur Ansteuerung der Parkbremsaktuatoren EPB-L, EPB-R übernimmt im wesentlichen alle Parkbremsansteuerungen - auch in einem HAP-Betriebsmodus - und wird, sofern der Hauptprozessor des Steuergeräts in Betrieb ist, welcher vorzugsweise von der funktionellen Baugruppe G2 zur Ansteuerung der Betriebsbremsen umfasst ist, von diesem mittels Kommunikationsschnittstelle L1 überwacht. Funktionelle Baugruppe G3 überwacht entsprechend funktionelle Baugruppe G2 im Hinblick auf auftretende Fehler oder Störungen.

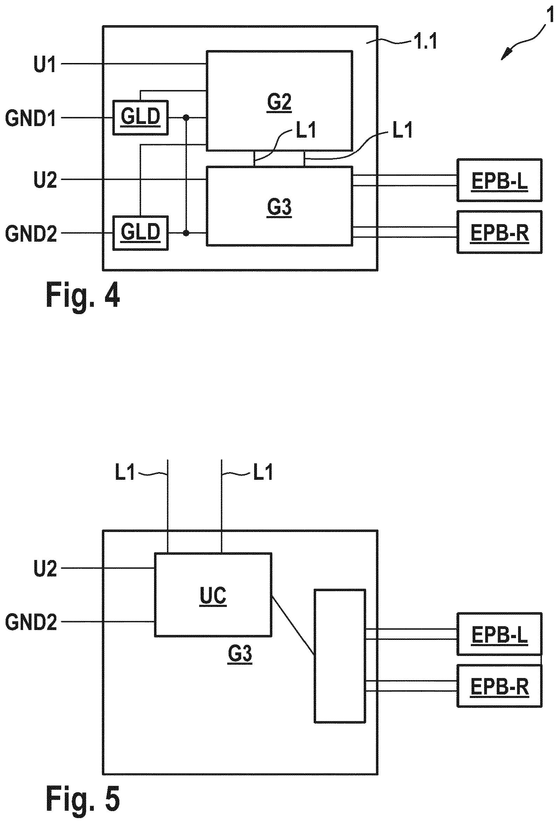

Entsprechend dieser Konfiguration kann die funktionelle Baugruppe G3 zur Ansteuerung der Parkbremsaktuatoren sekundär (bsp. Slave) der primären funktionellen Baugruppe G2, die entsprechen dieses Beispiels zum Ansteuern der Betriebsbremsen ausgestaltet ist, in ihrer Funktionalität hierarchisch untergeordnet sein. Die Aktivierung der Parkbremsansteuerung wird bevorzugt derart logisch (Elektronik) verriegelt, dass die Betätigung der Parkbremsaktuatoren ausschließlich dann erfolgt, wenn die funktionelle Baugruppe G2 dies anfordert bzw. zulässt oder der HAP-Betriebsmodus aktiviert und die funktionelle Baugruppe G3 zur Ansteuerung der Parkbremsaktuatoren zum autarken Betrieb autorisiert wurde und/oder nach einer Erkennung eines Fehlers des Hauptprozessors selbsttätig die Parkbremsen aktiviert . Dies wird entsprechend der in Fig. 5 gezeigten funktionellen Baugruppe G3 - beispielsweise für eine Ausführungsform des Bremssystems 1 nach Fig. 3 oder Fig. 4 - durch einen von dieser Baugruppe umfassten Schaltungsteil UC veranschaulicht. Der Schaltungsteil UC ermöglicht dabei bevorzugt den von funktioneller Baugruppe G2 unabhängigen (autarken) Betrieb der Parkbremsaktuatoren EPB-L, EPB-R durch Baugruppe G3. Anstelle eines zusätzlichen Mikroprozessors als sekundäre Baugruppe kann auch eine Schaltung, z.B. ein Steuerwerk, vorgesehen sein, welche ausgestaltet ist, bei einem Fehler der primären Baugruppe automatisch die Parkbremsaktuatoren zu aktivieren.

Das Ausführungsbeispiel von Bremssystem 1 bzw. des Steuergeräts 1.1 gemäß Fig. 4 weist im Vergleich zur Ausführungsform entsprechend Fig. 3 zusätzlich die Erkennungsschaltungen GLD für die Erkennung einer Unterbrechung des/der GND Potentiale auf. Alternativ oder in Ergänzung kann zumindest eine Erkennungsschaltung für die Erkennung einer Unterbrechung wenigstens eines der Versorgungspotentiale vorgesehen sein (nicht dargestellt) .

Entsprechend einer weiteren bevorzugten Ausführungsform (nicht dargestellt) erfolgt mittels eines Multiplexers ein Umschalten von der primären auf die sekundäre Baugruppe, wenn durch die primäre Baugruppe bzw. den Hauptprozessor der HAP-Betriebsmodus ausgelöst wird, damit die sekundäre Baugruppe bei Auftreten eines Fehlers der primären Baugruppe bzw. des Hauptprozessors eine Bremsung mittels der Parkbremsaktoren vornehmen kann.

## Patentansprüche

1. Steuergerät für ein Kraftfahrzeugbremssystem, umfassend
- eine erste funktionelle Baugruppe (G2, G4, G5) zur Ansteuerung einer Betriebsbremse und
- eine zweite funktionelle Baugruppe (G3, G4, G5) zur Ansteuerung einer Feststellbremse
- wobei die erste und die zweite funktionelle Baugruppe von separaten Spannungsversorgungen (U1, GND1, U2, GND2) versorgbar sind,
**dadurch gekennzeichnet, dass** das Steuergerät derart ausgestaltet ist, dass bei einem Fehler in oder mit Auswirkung für die erste oder die zweite funktionelle Baugruppe die jeweils andere funktionelle Baugruppe zumindest eine definierte Zeitspanne einsatzbereit verbleibt und zum Einrasten einer Getriebesperre des Fahrzeugs und/oder zum Halten des Fahrzeugs mittels der Feststellbremse im Stillstand eine Abbremsung des Kraftfahrzeugs mittels der einsatzbereiten funktionellen Baugruppe innerhalb der definierten Zeitspanne ausführbar ist.

2. Steuergerät gemäß Anspruch 1, **dadurch gekennzeichnet, dass** die erste funktionelle Baugruppe und die zweite funktionelle Baugruppe voneinander separiert sind.

3. Steuergerät gemäß Anspruch 1 oder 2, **dadurch gekennzeichnet, dass** zumindest eine Erkennungsschaltung zur Erkennung einer Unterbrechung eines Versorgungspotentials und/oder eines Bezugspotentials wenigstens einer der Spannungsversorgungen vorgesehen ist.

4. Steuergerät gemäß einem der vorhergehenden Ansprüche, **dadurch gekennzeichnet, dass** zumindest eine der separaten Spannungsversorgungen gepuffert ist.

5. Verfahren zur Ausführung in einem Steuergerät eines Kraftfahrzeugs, welches eine erste funktionelle Baugruppe zur Ansteuerung einer Betriebsbremse und eine zweite funktionelle Baugruppe zur Ansteuerung einer Feststellbremse aufweist, wobei die erste und die zweite funktionelle Baugruppe von separaten Spannungsversorgungen versorgbar sind, **dadurch gekennzeichnet, dass** bei einem Fehler in oder mit Auswirkung für die erste oder die zweite funktionelle Baugruppe die jeweils andere funktionelle Baugruppe zumindest eine definierte Zeitspanne einsatzbereit verbleibt und mittels der einsatzbereiten funktionellen Baugruppe und innerhalb der definierten Zeitspanne eine Abbremsung des Kraftfahrzeugs bis zu einem Einrasten einer Getriebesperre des Fahrzeugs bewirkt wird und/oder das Fahrzeug mittels der Feststellbremse im Stillstand gehalten werden kann.

6. Verfahren gemäß Anspruch 5, **dadurch gekennzeichnet, dass** die zweite funktionelle Baugruppe von der ersten funktionellen Baugruppe überwacht wird, wenn beide Baugruppen im laufenden Betrieb sind.

7. Verfahren gemäß Anspruch 5 oder 6, **dadurch gekennzeichnet, dass** eine Ansteuerung einer durch die zweite funktionelle Baugruppe betriebenen Feststellbremse auf Anforderung oder bei Zulassung durch die erste funktionelle Baugruppe erfolgt.

8. Verfahren gemäß wenigstens einem der Ansprüche 5 bis 7, **dadurch gekennzeichnet, dass** eine Ansteuerung einer durch die zweite funktionelle Baugruppe betriebenen Feststellbremse erfolgt, wenn die erste funktionelle Baugruppe eine selbstständige Ansteuerung durch die zweite funktionelle Baugruppe zulässt oder als Folge eines Fehlers in oder mit Auswirkung für die erste funktionelle Baugruppe.

9. Verfahren gemäß einem der Ansprüche 5 bis 7, **dadurch gekennzeichnet, dass** während eines Betriebes zum automatisierten Parken ein von der ersten elektronischen Baugruppe unabhängiger Betrieb der Feststellbremse durch die zweite elektronische Baugruppe vorliegt.

10. Bremssystem umfassend ein Steuergerät gemäß wenigstens einem der Ansprüche 1 bis 4.

## Claims

1. Controller for a motor vehicle brake system, including
- a first functional assembly (G2, G4, G5) for controlling a service brake, and
- a second functional assembly (G3, G4, G5) for controlling a parking brake
- wherein the first and the second functional assemblies can be supplied by separate voltage supplies (U1, GND1, U2, GND2),
**characterized in that** the controller is designed in such a way that, in the event of a fault in or affecting the first or the second functional assembly, the respective other functional assembly remains ready for use for at least a defined period of time, and the motor vehicle can be braked by means of the ready-for-use functional assembly within the defined period of time in order to engage a transmission lock of the vehicle and/or in order to hold the vehicle at a standstill using the parking brake.

2. Controller according to Claim 1, **characterized in that** the first functional assembly and the second functional assembly are separated from each other.

3. Controller according to Claim 1 or 2, **characterized in that** at least one detection circuit is provided for detecting an interruption of a supply potential and/or a reference potential of at least one of the voltage supplies.

4. Controller according to one of the preceding claims, **characterized in that** at least one of the separate voltage supplies is buffered.

5. Method to be carried out in a motor vehicle controller which comprises a first functional assembly for controlling a service brake and a second functional assembly for controlling a parking brake, wherein the first and the second functional assemblies can be supplied by separate voltage supplies, **characterized in that**, in the event of a fault in or affecting the first or the second functional assembly, the respective other functional assembly remains ready for use for at least a defined period of time, and the motor vehicle is braked by means of the ready-for-use functional assembly within the defined period of time until a transmission lock of the vehicle is engaged and/or the vehicle can be held at a standstill using the parking brake.

6. Method according to Claim 5, **characterized in that** the second functional assembly is monitored by the first functional assembly when both assemblies are in ongoing operation.

7. Method according to Claim 5 or 6, **characterized in that** a control of a parking brake operated by the second functional assembly takes place on demand or when permitted by the first functional assembly.

8. Method according to at least one of Claims 5 to 7, **characterized in that** a control of a parking brake operated by the second functional assembly takes place when the first functional assembly permits an automatic control by the second functional assembly or as a consequence of a fault in or affecting the first functional assembly.

9. Method according to one of Claims 5 to 7, **characterized in that**, during an automated parking operation, there is an operation of the parking brake by the second electronic assembly that is independent of the first electronic assembly.

10. Brake system including a controller according to at least one of Claims 1 to 4.

## Revendications

1. Dispositif de commande pour un système de freinage de véhicule automobile, comportant
- un premier ensemble fonctionnel (G2, G4, G5) pour la commande d'un frein de service et
- un deuxième ensemble fonctionnel (G3, G4, G5) pour la commande d'un frein de stationnement,
- dans lequel le premier et le deuxième ensemble fonctionnel peuvent être alimentés par des alimentations en tension séparées (U1, GND1, U2, GND2),
**caractérisé en ce que** le dispositif de commande est configuré de telle sorte qu'en cas de défaillance dans le premier ou le deuxième ensemble fonctionnel ou de défaillance influant sur le premier ou le deuxième ensemble fonctionnel, l'autre ensemble fonctionnel respectif demeure opérationnel au moins pendant un laps de temps défini et un freinage du véhicule automobile peut être effectué au moyen de l'ensemble fonctionnel opérationnel pendant le laps de temps défini pour enclencher un blocage de transmission du véhicule et/ou pour maintenir le véhicule à l'arrêt au moyen du frein de stationnement.

2. Dispositif de commande selon la revendication 1, **caractérisé en ce que** le premier ensemble fonctionnel et le deuxième ensemble fonctionnel sont séparés l'un de l'autre.

3. Dispositif de commande selon la revendication 1 ou 2, **caractérisé en ce qu'**au moins un circuit de détection servant à la détection d'une interruption d'un potentiel d'alimentation et/ou d'un potentiel de référence d'au moins l'une des alimentations en tension est prévu.

4. Dispositif de commande selon l'une des revendications précédentes, **caractérisé en ce qu'**au moins l'une des alimentations en tension séparées comporte un module tampon.

5. Procédé destiné à être mis en œuvre dans un dispositif de commande d'un véhicule automobile, lequel comprend un premier ensemble fonctionnel pour la commande d'un frein de service et un deuxième ensemble fonctionnel pour la commande d'un frein de stationnement, dans lequel le premier et le deuxième ensemble fonctionnel peuvent être alimentés par des alimentations en tension séparées, **caractérisé en ce qu'**en cas de défaillance dans le premier ou le deuxième ensemble fonctionnel ou de défaillance influant sur le premier ou le deuxième ensemble fonctionnel, l'autre ensemble fonctionnel respectif demeure opérationnel au moins pendant un laps de temps défini et, au moyen de l'ensemble fonctionnel opérationnel et pendant le laps de temps défini, un freinage du véhicule automobile jusqu'à un enclenchement d'un blocage de transmission du véhicule est provoqué et/ou le véhicule peut être maintenu à l'arrêt au moyen du frein de stationnement.

6. Procédé selon la revendication 5, **caractérisé en ce que** le deuxième ensemble fonctionnel est surveillé par le premier ensemble fonctionnel lorsque les deux ensembles sont en cours de fonctionnement.

7. Procédé selon la revendication 5 ou 6, **caractérisé en ce qu'**une commande d'un frein de stationnement actionné par le deuxième ensemble fonctionnel a lieu à la demande du premier ensemble fonctionnel ou lorsque le premier ensemble fonctionnel l'autorise.

8. Procédé selon au moins l'une des revendications 5 à 7, **caractérisé en ce qu'**une commande d'un frein de stationnement actionné par le deuxième ensemble fonctionnel a lieu lorsque le premier ensemble fonctionnel autorise une commande automatique par le deuxième ensemble fonctionnel ou en conséquence d'une défaillance du premier ensemble fonctionnel ou d'une défaillance influant sur celui-ci.

9. Procédé selon l'une des revendications 5 à 7, **caractérisé en ce que** pendant un fonctionnement pour le stationnement automatique, un fonctionnement, indépendant du premier ensemble électronique, du frein de stationnement au moyen du deuxième ensemble électronique est présent.

10. Système de freinage comportant un dispositif de commande selon au moins l'une des revendications 1 à 4.
